Europäisches Patentamt

European Patent Office

Office européen des brevets

(11) Veröffentlichungsnummer: **0 034 766**
A2

(12) # EUROPÄISCHE PATENTANMELDUNG

(21) Anmeldenummer: 81100978.6

(22) Anmeldetag: 12.02.81

(51) Int. Cl.³: **G 01 N 1/10**
G 01 N 33/20, C 21 B 7/24

(30) Priorität: 20.02.80 DE 3006281

(43) Veröffentlichungstag der Anmeldung:
02.09.81 Patentblatt 81/35

(84) Benannte Vertragsstaaten:
BE CH FR GB IT LI LU NL SE

(71) Anmelder: ELECTRO-NITE N.V.
Grote Baan 27a
B-3530 Houthalen(BE)

(72) Erfinder: Plessers, Jacques Joseph, Dipl.-Ing.
Herebaan-West 62
B-3530 Houthalen-Helchteren(BE)

(74) Vertreter: Radt, Finkener, Ernesti Patentanwälte
Heinrich-König-strasse 119
D-4630 Bochum 1(DE)

(54) Verfahren zur Entnahme von Proben aus Roheisen-Schmelzen.

(57) Verfahren zur Entnahme von Proben aus Roheisen-Schmelzen, die unter Bildung eines homogenen Weißeisengefüges erstarren, bei dem die Erstarrung in Anwesenheit von seltenen Erden, die in Form von handelsüblichem Cermischmetall vorliegen können, vorgenommen wird, wobei die seltenen Erden in einer Menge von 0,3 bis 6 Gew.-%, bezogen auf das Gewicht der Probe, zugesetzt werden.

EP 0 034 766 A2

Croydon Printing Company Ltd.

Ruch. St. Konen, Ernesti
                    e
Hei…              Str. 119
   4630 Bochum 1
     Ersen

## Verfahren zur Entnahme von Proben aus Roheisen-Schmelzen

Die Erfindung betrifft ein Verfahren zur Entnahme von Proben aus Roheisen-Schmelzen, z.B. aus der Hochofen-Abstichrinne, einer normalen Pfanne oder einer Torpedopfanne, die unter Bildung eines homogenen Weißeisengefüges erstarren, bei dem die Probe in dem Hohlraum des Probenehmers in Anwesenheit einer geringen Menge eines Zusatzstoffes erstarrt.

Die Entnahme von Proben aus Roheisen, die mit einem homogenen Weißeisengefüge (Weißeisenguß) erstarren, ist in der Praxis auf Schwierigkeiten gestoßen. Ohne die Anwendung besonderer Maßnahmen erstarrt Roheisen mit einem Gefüge, das infolge von Graphitausfällungen eine schwarze Färbung hat. Derartige Proben sind für vollständige spektrometrische Roheisenanalysen ungeeignet, da diese voraussetzen, daß die Proben mit einer weißen und homogenen Struktur erstarren, die an einer Bruchstelle sichtbar wird.

Es kommt hinzu, daß durch Graphitausfällungen in der Probe auch die Reproduzierbarkeit der Analyse und die Representativität der Probenahme nicht gewährleistet ist, was insbesondere am Ende des Schmelzprozesses von Bedeutung ist. Derartige Proben mit viel Graphitausscheidungen an der analytischen Oberfläche sind auch für die quantometrische Analyse ungeeignet.

Man ist seit langem bemüht, die Erstarrung von Roheisenproben so zu steuern, daß die Verfestigung zu einem homogenen Weißeisengefüge garantiert wird. Zum Stande der Technik gehört eine Methode, die auf der direkten Umwandlung des Hochofen-Roheisens im Augenblick der Probenahme in ein niedrig legiertes Roheisen beruht. Dabei ist vorgesehen, der Probe Chrom und Vanadium als sogenannte Karbide bildende Elemente zuzusetzen, deren Wirkung darauf beruht, daß der Kohlenstoff gebunden wird, so daß die Ausscheidung von Graphit verhindert wird und die Probe zu einem Weißeisengefüge erstarrt. Die bekannte Methode hat insofern Nachteile, als Elemente zugesetzt werden, bei denen es sich gegebenenfalls um zu analysierende Elemente handelt. Außerdem benötigt das Verfahren einen Löffel, in dem die zugesetzten Elemente aufgelöst und mit der Probe vermischt werden.

Aus dem französischen Patent 2 171 627 ist eine Vorrichtung zur Entnahme von Roheisenproben bekannt, mit der die Erstarrung der Probe zu einem homogenen Weißeisengefüge möglich ist. Dabei wird eine bestimmte Menge pulverförmiges Tellur als Zusatzstoff in eine Metallfolie, z.B. Aluminiumpapier, eingehüllt und so in der Vorrichtung angebracht, daß das flüssige Roheisen den Zusatzstoff auflöst, bevor es erstarrt.

Der Erfindung liegt die Aufgabe zugrunde, bei der Probenahme, insbesondere von Roheisen, die Erstarrung zu einem Weißeisengefüge unter Verwendung eines Zusatzstoffes zu ermöglichen, der einerseits im Handel zu vertretbaren Bedingungen erhältlich ist und sich andererseits in dem Roheisen so schnell auflöst, daß die Probenahme ohne zusätzliche Maßnahmen, wie z.B. der Verwendung eines Löffels oder dergleichen, mit handelsüblichen, eine Mischkammer enthaltenden Probenehmern durchgeführt werden kann.

Es hat sich überraschenderweise herausgestellt, daß eine einwandfreie Verfestigung der Proben zu einem homogenen Weißeisengefüge dann erzielt wird, wenn die Erstarrung in Anwesenheit von seltenen Erden erfolgt. Erfindungsgemäß besteht die Möglichkeit, die seltenen Erden in Form von handelsüblichem Cermischmetall zuzusetzen.

Gemäß einem weiteren Merkmal der Erfindung werden die Zusatzstoffe in einer Menge von etwa 0,3 bis 6 Gew.-%, bezogen auf das Gewicht der Probe, zugegeben.

Die Probenahme kann beispielsweise mit einer bekannten, mit einer Mischkammer versehenen Vorrichtung erfolgen, die auf das Ende eines Papprohres aufsteckbar ist. Die Vorrichtung besteht aus einem Sandkörper, in dessen Innenraum ein Probebehälter zum Ziehen einer scheibenförmigen Probe angeordnet ist. Die Einlauföffnung ist mittels eines Röhrchens bis an das obere Ende des Sandkörpers verlängert, auf das eine Metallkappe gestülpt ist, deren Hohlraum die Zulauföffnung umgibt. Der nach oben gerichtete Boden der tassenförmig ausgebildeten Kappe ist mit einer Öffnung versehen. Auf die Kappe ist eine zweite, ähnlich ausgebildete Kappe aufgeschoben, deren Boden ebenfalls mit einer Öffnung versehen ist. Die beiden Öffnungen in den Böden der Kappen sind versetzt zueinander und zu der Öffnung des Röhrchens angeordnet. Die durch die Kappen gebildeten Hohlräume stellen sogenannte Mischkammern dar. Die obere Kappe wird dann noch durch eine Schlackenkappe abgedeckt, über der sich eine Schutzkappe aus Pappe befindet.

Zur Entnahme einer Probe aus einem Roheisen mit einem Gehalt von 4,5 % Kohlenstoff, 0,9 % Silizium und 0,2 % Phosphor wurde in die obere Mischkammer, also in die Kammer zwischen den beiden mit den Öffnungen versehenen Böden der unteren Kappen, ein zu einer Wendel gerollter Draht aus Cermischmetall eingebracht, der eine Länge von 75 mm und einen Durchmesser von 2,2 mm hatte. Das Gewicht des Drahtes betrug etwa 2 g. Der Probenehmer wurde auf das Ende einer aus einem Papprohr bestehenden Meßlanze gesteckt und die Probe durch Eintauchen in die Roheisen-Schmelze gezogen.

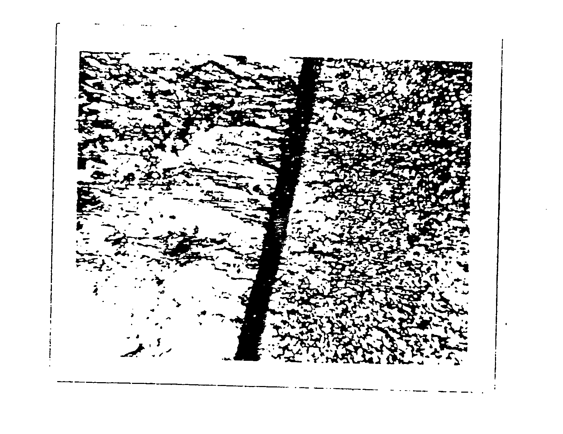

Nach dem Abkühlen wurde die Probe aus dem Probebehälter entfernt und gebrochen. Wie sich aus der oberen Hälfte der beigefügten Abbildung ergibt, erfolgte die Erstarrung mit einem Weißeisengefüge.

Der gleiche Versuch wurde mit einer identischen Vorrichtung wiederholt, der kein Cermischmetall zugesetzt wurde. Die Bruchstelle ist auf der unteren Hälfte der Abbildung dargestellt, die deutlich erhebliche Graphitausfällungen (graue Erstarrung) erkennen läßt.

Radt, Finkener, Ernesti
Patentanwälte

Heinrich-König-Straße ✗ 119
4630 Bochum
Fernsprecher (0234) 47727 / 28
Telegrammadresse: Radtpatent Bochum

P1901
80-102
EEF/US

Patentansprüche

1. Verfahren zur Entnahme von Proben aus Roheisen-Schmelzen, insbesondere aus der Hochofen-Abstichrinne, einer Pfanne oder einer Torpedopfanne, die unter Bildung eines homogenen Weißeisengefüges erstarren, bei dem die Probe in dem Hohlraum des Probenehmers in Anwesenheit einer geringen Menge eines Zusatzstoffes erstarrt, d a - d u r c h   g e k e n n z e i c h n e t , daß die Erstarrung in Anwesenheit von seltenen Erden vorgenommen wird.

2. Verfahren nach Anspruch 1, dadurch gekennzeichnet, daß die seltenen Erden in Form von handelsüblichem Cermischmetall zugesetzt werden.

3. Verfahren nach den Ansprüchen 1 und 2, dadurch gekennzeichnet, daß die seltenen Erden bzw. das Cermischmetall in einer Menge von 0,3 bis 6 Gew.-%, bezogen auf das Gewicht der Probe, zugesetzt werden.